# EUROPEAN PATENT APPLICATION

(11) **EP 3 372 387 A1**
(43) Date of publication of application: **12.09.2018**
(21) Application number: 16861975.7
(22) Date of filing: 26.10.2016
(51) Int. Cl.: B29C 65/56

(54) **FIXING STRUCTURE**

(30) Priority: 02.11.2015 JP 2015215422
(71) Applicant: Tyco Electronics Japan G.K., Kawasaki-shi, Kanagawa 213-8535 (JP)
(72) Inventor: AJISAKA, Toshiharu, Kawasaki-shi Kanagawa 213-8535 (JP)
(74) Representative: Johnstone, Douglas Ian
(86) International application number: PCT/JP2016/081684
(87) International publication number: WO 2017/077913

(57) **Abstract**

Provided is a fixing structure in which a gap is maintained between a through-hole wall surface and a protrusion. In order to fix a metal plate 10 to a resin plate 20 by heat staking, a through-hole 11 having a larger diameter than that of a heat staking protrusion 21 formed on the resin plate 20 is formed in the metal plate 10. Then, a sheet material 30 having a low thermal conductivity is laid on the metal plate 10. The sheet material 30 has a small-diameter through-hole 31 just large enough to allow the heat staking protrusion 21 to pass through. Then, with the sheet material 30 laid on the metal plate 10, the heat staking protrusion 21 is heated and melted to fix the metal plate 10 to the resin plate 20 by heat staking.

## Description

### Technical Field

The present invention relates to a fastening structure for fastening a member having a high thermal conductivity, for example, made of metal or the like, by heat staking or the like.

### Background Art

A structure for fastening a member by heat staking is adopted in cameras, mobile phones, or other various pieces of equipment. For example, PTL 1 shows a structure for heat staking in a connector.

Here, a structure for fastening a metal member having a high thermal conductivity by resin heat staking in a piece of equipment installed in an automobile is discussed.

In the case of a piece of equipment installed in an engine compartment of an automobile, it is necessary to ensure the operation thereof in a wide temperature range, for example, from -40 to 150 °C. In order to achieve this, it is also necessary to use ingenuity for the fastening structure mentioned above. That is, not only the thermal conductivity but also the coefficient of thermal expansion is significantly different between metal and resin. Accordingly, the diameter of a through-hole formed in a metal material through which a protrusion for heat staking provided on a resin material penetrates is required to be larger than the diameter of the protrusion. That is, it is necessary to provide a gap between a wall face of the through-hole and the protrusion so that the gap absorbs a dimensional change due to the difference in coefficient of thermal expansion, thereby preventing occurrence of a distortion.

On the other hand, heat staking is a technique for heating and melting the protrusion mentioned above. Accordingly, there is the problem that, during melting of the protrusion, molten resin flows into the gap between the protrusion and the wall face of the through-hole, and consequently fills the gap.

In PTL 2, a structure having a gap between the protrusion and the through-hole is shown. However, the technique suggested in JP2008-162125A is a technique for ensuring that the gap between the protrusion and the wall face of the through-hole is filled and therefore a technique incompatible with the problem presented herein.

### Citation List

### Patent Literature

PTL 1: JP2003-264025A
PTL 2: JP2008-162125A

### Summary of Invention

### Technical Problem

In view of these circumstances, an object of the present invention is to provide a fastening structure securing a gap between a through-hole wall face and a protrusion.

### Solution to Problems

A fastening structure of the present invention achieving the above object is characterized in that the fastening structure is provided with: a thermoplastic first member having a protrusion; a second member having a first through-hole having a diameter larger than a diameter of the protrusion, and having a higher thermal conductivity than the first member; and a sheet-like third member having a second through-hole communicating with the first through-hole and penetrated by the protrusion, being so placed on the second member that the second member is interposed between the third member and the first member, and having a lower thermal conductivity than the first member, wherein the second member is fastened to the first member by thermal deformation of a portion of the protrusion penetrating the first through-hole and the second through-hole or overmolding to the portion.

The fastening structure of the present invention is provided with the sheet-like third member placed on the second member and having a lower thermal conductivity than the first member.

Accordingly, heat in heat staking or heat due to overmolding is blocked by the third member, so that the heat is not easily transferred to a portion of the protrusion facing a wall face of the through-hole. In addition, a material melted by heat staking or overmolding is blocked by the third member and prevented from entering the gap between the protrusion and the wall face of the through-hole. In this manner, the gap between the protrusion and the wall face of the through-hole is secured.

Here, in the fastening structure of the present invention, it is preferred that the second through-hole be a through-hole having a smaller diameter than the first through-hole.

Thereby, the entry of the molten material into the gap is more reliably prevented.

In addition, the fastening structure of the present invention may be such that the first member is a member made of a resin material, the second member is made of a metal material, and the second member is fastened to the first member by heat staking of the protrusion.

The present invention, specifically, is suitable for such a fastening structure.

### Advantageous Effects of Invention

According to the present invention described above, a fastening structure securing the gap between the wall face of the through-hole and the protrusion, thereby avoiding occurrence of a distortion due to the difference in coefficient of thermal expansion, is achieved.

### Brief Description of Drawings

Figure 1 is a schematic view of a component called bus bar constituting a piece of equipment installed in an automobile; and
Figures 2(A) to 2(C) are cross sectional views showing a heat-staking structure adopted in the component shown in Figure 1.

### Description of Embodiments

An embodiment of the present invention will be described below.

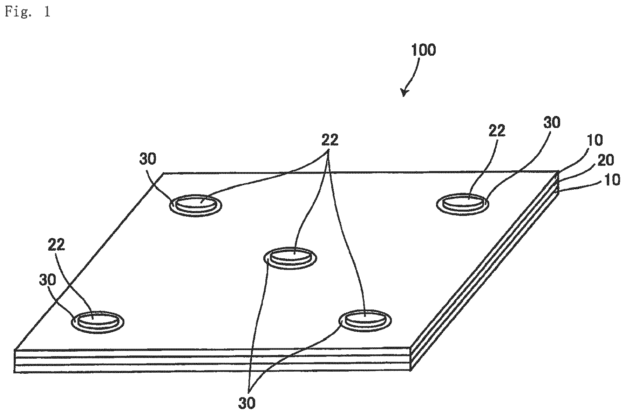

Figure 1 is a schematic view of a component called bus bar constituting a piece of equipment installed in an automobile.

The component 100 is a component for transferring power by means of two metal plates 10, 10. In the component 100, a resin plate 20 is interposed between the two metal plates 10, 10. The resin plate 20 takes a role of keeping a constant distance between the two metal plates 10, 10 and electrically insulating the two metal plates 10, 10 from each other. The two metal plates 10, 10 are each fastened to the resin plate 20 by heat staking. In Figure 1, a plurality (five in Figure 1) of heat-staking head portions 22 for fastening the metal plate 10 at an upper face side of Figure 1 to the resin plate 20 by heat staking are visible. A sheet member 30 are interposed between the head portion 22 and the metal plate 10. The metal plate 10 at a lower face side of Figure 1 is also fastened to the resin plate 20 by means of a similar heat-staking structure.

In the present embodiment, the resin plate 20 is equivalent to an example of a first member defined in the present invention. In addition, each of the two metal plates 10, 10 is equivalent to an example of a second member defined in the present invention. Furthermore, the sheet member 30 is equivalent to an example of a sheet-like third member defined in present invention.

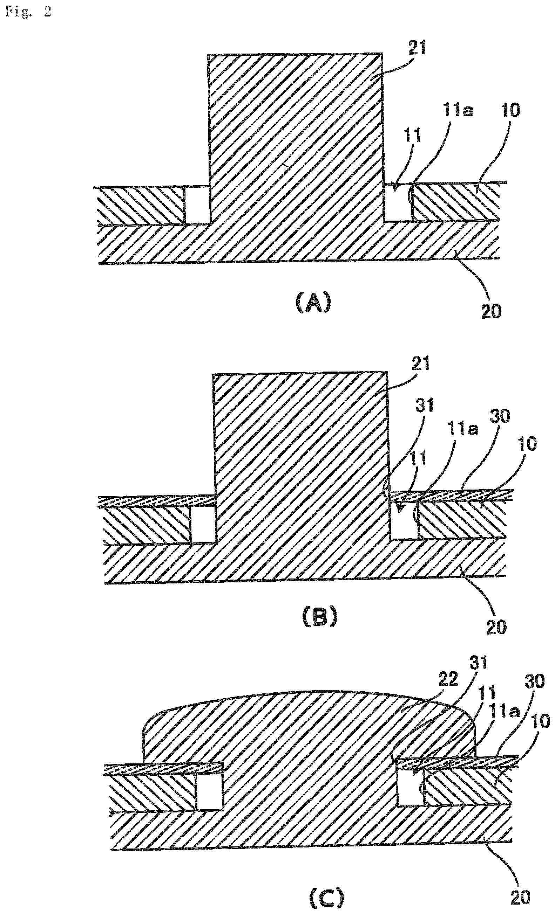

Figures 2(A) to 2(C) are cross sectional views showing a heat-staking structure adopted in the component shown in Figure 1. In Figures 2(A) to 2(C), only one metal plate of the two metal plates and the structure of one heat-staking portion are shown.

Here, Figure 2(A) shows a state before heat staking and before placement of the sheet member. In addition, Figure 2(B) shows a state before heat staking and after placement of the sheet member. Furthermore, Figure 2(C) shows a state after heat staking.

The resin plate 20 is a member made of thermoplastic resin, and has heat-staking protrusions 21. Specifically, the resin plate 20 in the present embodiment is made of a PBT (polybutyleneterephthalate) material. The thermal conductivity of the resin plate 20 is approximately 0.29 W/mK. In addition, the metal plate 10 here is made of a copper alloy, and has through-holes 11. The through-hole 11 is equivalent to an example of a first through-hole defined in the present invention. The thermal conductivity of the metal plate 10 is approximately 400 W/mK, and therefore the metal plate 10 has an extremely high thermal conductivity as compared with the resin plate 20. Here, the heat-staking protrusion 21 is inserted into the through-hole 11, as shown in Figure 2(A), at the time of heat staking. The through-hole 11 formed in the metal plate 10 is a through-hole the diameter of which is larger than the diameter of the heat-staking protrusion 21 provided on the resin plate 20. Accordingly, a gap is formed between the heat-staking protrusion 21 penetrating the through-hole 11 and a wall face 11a of the through-hole 11.

At the time of heat staking, furthermore, as shown in Figure 2(B), the sheet member 30 is so placed on the metal plate 10 that the metal plate 10 is interposed between the sheet member 30 and the resin plate 20. The sheet member 30 is formed with a through-hole 31 communicating with the through-hole 11 formed in the metal plate 10. The through-hole 31 is equivalent to an example of a second through-hole defined in the present invention. The through-hole 31 is a through-hole having a smaller diameter than the first through-hole 11 and having a dimension sufficient for the heat-staking protrusion 21 to barely pass therethrough. The sheet member 30 has a lower thermal conductivity than the resin plate 20. Specifically, in the present embodiment, a fluorine-based sheet having a thermal conductivity of approximately 0.2 W/mK, or a polyimide-based sheet is adopted. In addition, the heatproof temperature of the sheet member 30 is required to be higher than the melting point of the resin plate 20. For example, if the resin plate 20 is made of PBT, then the sheet member 30 is required to withstand 223 °C.

After the sheet member 30 is placed, as shown in Figure 2(B), the heat-staking protrusion 21 is heated and melted by applying a heat-staking head (not shown) to the heat-staking protrusion 21. Then, once the heat-staking protrusion 21 melted cools down, the heat-staking head portion 22 made of resin is formed, as shown in Figure 2(C). The metal plate 10 is fastened to the resin plate 20 with the head portion 22. The sheet member 30, on the one hand, takes a role of preventing molten resin from entering the gas between the heat-staking protrusion 21 and the wall face 11a of the first through-hole 11. The sheet member 30 further takes a role of preventing heat at the time of heat staking from being transferred to the metal plate 10.

Here, if the sheet member 30 is not placed and heat staking is conducted in the state shown in Figure 2(A), on the one hand, the molten resin enters the gap between the heat-staking protrusion 21 and the wall face 11a of the first through-hole 11. In addition, on the other hand, the heat is immediately transferred via the metal plate 10 having an extremely high thermal conductivity, and consequently a portion of the heat-staking protrusion 21 extending within the first through-hole 11 is also immediately melted. For these two reasons, the molten resin may fill the gap between the heat-staking protrusion 21 and the wall face 11a of the first through-hole 11, and therefore the gap may not be secured.

Here, the metal plate 10 and the resin plate 20 are also significantly different in coefficient of thermal expansion. Accordingly, if the environmental temperature becomes high without the gap secured, a distortion occurs there, and the component 100 shown in Figure 1 deforms, and accordingly may not operate correctly. In the case of the present embodiment, since the sheet member 30 having a low thermal conductivity and formed with the through-hole 31 having a small diameter is placed, the gap is reliably secured. Therefore, a dimensional change due to the difference in coefficient of thermal expansion is absorbed by the gap, so that a deformation, such as a distortion or a warp, of the component 100 shown in Figure 1 is prevented even in a high-temperature environment.

It should be noted that, herein, a fastening structure for fastening the metal plate 10 to the resin plate 20 by heat staking by heating and melting the heat staking protrusion 21 has been described. However, the fastening structure of the present invention is not limited to fastening by heat staking. That is, the fastening structure of the present invention may adopt a fastening method using overmolding in which molten resin or the like is so poured in as to cover a protrusion equivalent to the heat-staking protrusion 21 in the embodiment described above.

In addition, though an example of fastening the metal plate 10 to the resin plate 20 has been described herein, the present invention is not limited to the metal plate 10 and the resin plate 20. The fastening structure of the present invention is widely adoptable when a member having a high thermal conductivity is fastened by heat staking or overmolding.

### Reference Signs List

10...metal plate
11... through-hole
11a...wall face
20...resin plate
21...heat-staking protrusion
22...heat portion
30... sheet member
31...through-hole
100...component

## Claims

1. A fastening structure comprising:
a thermoplastic first member having a protrusion;
a second member having a first through-hole having a diameter larger than a diameter of the protrusion, and having a higher thermal conductivity than the first member; and
a sheet-like third member having a second through-hole communicating with the first through-hole and penetrated by the protrusion, being so placed on the second member that the second member is interposed between the third member and the first member, and having a lower thermal conductivity than the first member, wherein
the second member is fastened to the first member by thermal deformation of a portion of the protrusion penetrating the first through-hole and the second through-hole or overmolding to the portion.

2. The fastening structure according to claim 1, wherein the second through-hole is a through-hole having a smaller diameter than the first through-hole.

3. The fastening structure according to claim 1 or 2, wherein the first member is a member made of a resin material, the second member is made of a metal material, and the second member is fastened to the first member by heat staking of the protrusion.
